# EUROPEAN PATENT APPLICATION

(11) **EP 4 751 956 A1**
(43) Date of publication of application: **03.06.2026**
(21) Application number: 24848286.1
(22) Date of filing: 30.07.2024
(51) Int. Cl.: B60K 1/04, B60S 5/06, B60L 53/80

(54) **LOCK ASSEMBLY, MOUNTING BRACKET, BATTERY, AND ELECTRIC DEVICE**

(30) Priority: 01.08.2023 CN 202310960336
(71) Applicant: Contemporary Amperex Technology Co., Limited, Ningde, Fujian 352100 (CN); Contemporary Amperex Energy Service Technology Limited, Xiamen, Fujian 361001 (CN)
(72) Inventor: ZENG, Zhimin, Ningde, Fujian 352100 (CN); WANG, Kangyu, Ningde, Fujian 352100 (CN); WU, Yuanhe, Ningde, Fujian 352100 (CN); BAO, Yichen, Ningde, Fujian 352100 (CN)
(74) Representative: Gong, Jinping
(86) International application number: PCT/CN2024/108633
(87) International publication number: WO 2025/026331

(57) **Abstract**

A lock assembly (100), a mounting bracket, a battery (300), and an electric apparatus (200) are provided. The lock assembly (100) includes: a mounting base (10), including a first locking wall surface (15), where the first locking wall surface (15) has a lock pin passage groove (13); a first locking member (20), including a first mating portion (25) and a locking groove (21), where a plane passing through an axis of a first rotation shaft (22) is a first plane; and a second locking member (30), including a second mating portion (34), where a plane passing through an axis of a second rotation shaft (32) is a second plane. When the first mating portion (25) mates with the second mating portion (34), an overlapping region A of the locking groove (21) and the lock pin passage groove (13), projected in a direction perpendicular to the first locking wall surface (15), is located between the first plane and the second plane.

## Description

### CROSS-REFERENCE TO RELATED APPLICATIONS

This application claims priority to Chinese Patent Application No. 202310960336.1, filed on August 1, 2023, which is incorporated herein by reference in its entirety.

### TECHNICAL FIELD

This application relates to the field of locks, and specifically, to a lock assembly, a mounting bracket, a battery, and an electric apparatus.

### BACKGROUND

In the related art, an electric apparatus may be provided with a lock assembly. The lock assembly is provided with a lock structure for mounting a battery. The lock structure is mounted to a housing of the lock assembly via a mounting shaft. After the battery is mounted to the electric apparatus, the battery is mounted to the lock structure, causing the gravitational force of the battery to concentrate on the mounting shaft. This concentrated force on the lock assembly results in poor static load-bearing capacity, affecting the service life of the lock assembly.

### SUMMARY

This application aims to address at least one of the technical problems in the related art to some extent.

To this end, an object of this application is to provide a lock assembly.

Another object of this application is to provide a mounting bracket.

Another object of this application is to provide a battery.

Another object of this application is to provide an electric apparatus.

According to a first aspect, an embodiment of this application provides a lock assembly including:
a mounting base, including a first locking wall surface, where the first locking wall surface has a lock pin passage groove, and the lock pin passage groove is configured to be recessed along a first direction;
a first locking member, rotatably disposed on the mounting base along a first rotation shaft, where the first locking member includes a first mating portion and a locking groove, and a plane passing through an axis of the first rotation shaft and perpendicular to the first locking wall surface is a first plane, the first plane being parallel to the first direction; and
a second locking member, rotatably disposed on the mounting base along a second rotation shaft, where the second locking member includes a second mating portion, and a plane passing through an axis of the second rotation shaft and perpendicular to the first locking wall surface is configured as a second plane, the second plane being parallel to the first direction; where
the lock assembly is configured such that when the first locking member rotates to cause the first mating portion to mate with the second mating portion, the first locking member is locked by the second locking member, and an overlapping region A of the locking groove and the lock pin passage groove, projected in a direction perpendicular to the first locking wall surface, is located between the first plane and the second plane.

According to the lock assembly of the embodiment of this application, through provision the first locking member and the second locking member, after the battery is assembled to the lock assembly, the gravitational force of the battery is distributed between the first locking member and the second locking member. The first locking member and the second locking member share the load, reducing the difference in force distribution between the first rotation shaft and the second rotation shaft. This enhances the static load-bearing capacity of the lock assembly, and helps extend the service life of the lock assembly.

According to a second aspect, an embodiment of this application provides a mounting bracket, configured for mounting a battery to an electric apparatus, where the mounting bracket includes the foregoing lock assembly, and the lock assembly is configured to be detachably connected to the battery.

According to a third aspect, an embodiment of this application provides a battery, where the battery includes the foregoing lock assembly, and the lock assembly is configured to detachably mount the battery to an electric apparatus.

According to a fourth aspect, an embodiment of this application provides an electric apparatus including a battery and the foregoing lock assembly, where the battery is detachably mounted to the electric apparatus via the lock assembly.

Additional aspects and advantages of this application will be partially provided in the following description, and some will become apparent from the following description or be understood through the practice of this application.

### BRIEF DESCRIPTION OF DRAWINGS

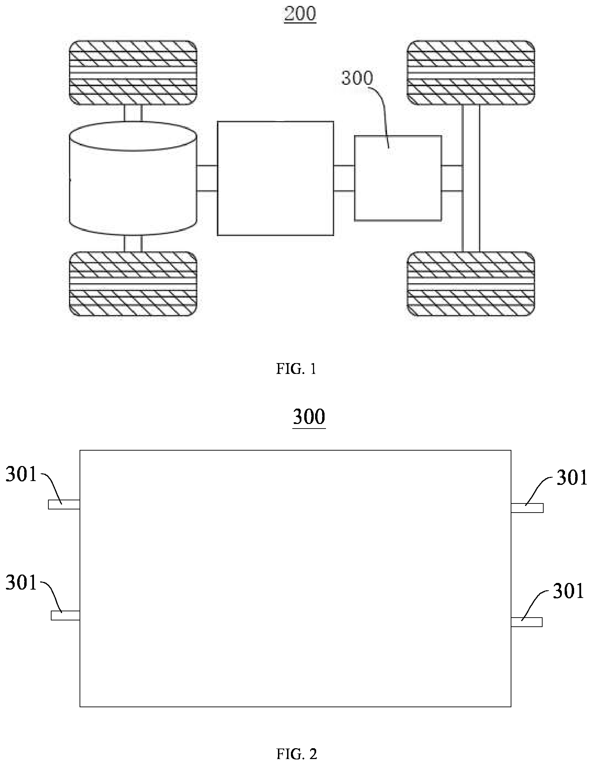

FIG. 1 is a schematic diagram of a vehicle according to some embodiments of this application;
FIG. 2 is a schematic diagram of a battery according to some embodiments of this application;
FIG. 3 is a schematic diagram of a lock assembly according to some embodiments of this application;
FIG. 4 is a schematic diagram of a second locking member locking a first locking member in a lock assembly according to some embodiments of this application;
FIG. 5 is a schematic diagram of a battery lock pin being mounted to a lock assembly according to some embodiments of this application;
FIG. 6 is a schematic diagram of a first locking member being located in a first unlocking position in a lock assembly according to some embodiments of this application; and
FIG. 7 is a schematic diagram of a drive assembly of a lock assembly being mounted to a mounting base according to some embodiments of this application.

### DESCRIPTION OF EMBODIMENTS

To make the objectives, technical solutions, and advantages of the embodiments of this application clearer, the technical solutions in the embodiments of this application will be described clearly below with reference to the accompanying drawings in the embodiments of this application. Obviously, the described embodiments are some, but not all, embodiments of this application. Based on the embodiments in this application, all other embodiments obtained by those of ordinary skill in the art without creative efforts fall within the protection scope of this application.

Unless otherwise defined, all technical and scientific terms used in this application have the same meanings as commonly understood by those skilled in the technical field of this application. The terms used in the specification of this application are for the purpose of describing specific embodiments only and are not intended to limit this application; the terms "including" and "having" and any variations thereof in the specification, claims, and the above description of the drawings of this application are intended to cover non-exclusive inclusion. In the specification, claims, or accompanying drawings of this application, the terms "first", "second", and the like are intended to distinguish between different objects rather than to describe a particular order or a primary-secondary relationship.

Reference to "embodiment" in this application means that a particular feature, structure, or characteristic described in connection with the embodiment may be included in at least one embodiment of this application. The appearance of this phrase in various places in the specification does not necessarily refer to the same embodiment, or indicate that these embodiments are mutually exclusive, independent or alternative to other embodiments.

In the description of this application, it should be noted that unless otherwise specified and defined explicitly, the terms "mount", "connect", "join", and "attach" should be understood in their general senses. For example, they may refer to a fixed connection, a detachable connection, or an integral connection; and a direct connection, an indirect connection via an intermediate medium, or an internal communication between two elements. For those of ordinary skill in the art, the specific meanings of the above terms in this application can be understood based on specific circumstances.

The term "and/or" in this application is merely an association relationship describing associated objects, indicating that three relationships may exist. For example, A and/or B may indicate: A exists alone, A and B exist simultaneously, and B exists alone.

In the embodiments of this application, the same reference numerals denote the same components, and for brevity, detailed descriptions of the same components are omitted in different embodiments. It should be understood that, as shown in the accompanying drawings, sizes such as thickness, length, and width of various members and sizes such as thickness, length, and width of integrated devices in the embodiments of this application are merely for illustrative purposes and should not constitute any limitations on this application.

The term "battery" mentioned in the embodiments of this application refers to a single physical module including one or more battery cells to provide higher voltage and capacity. For example, the battery mentioned in this application may include a battery module, a battery pack, or the like. The battery generally includes a casing for packaging one or more battery cells or multiple battery modules. The casing can prevent liquids or other foreign objects from affecting the charging or discharging of the battery cells.

In recent years, new energy vehicles have achieved leapfrog development. In the field of electric vehicles, power batteries as a power source play an irreplaceable and crucial role. A battery includes a casing and a plurality of battery cells accommodated in the casing. As a core component of new energy vehicles, batteries need to meet stringent requirements in terms of both safety and cycle life.

To mount a battery to an electric apparatus, the electric apparatus may be provided with a lock assembly. The lock assembly includes a lock structure for mounting the battery. The lock structure is mounted to a housing of the lock assembly via a mounting shaft. After the battery is mounted to the electric apparatus, the battery is mounted to the lock structure, causing the gravitational force of the battery to concentrate on the mounting shaft. This concentrated force on the lock assembly results in poor static load-bearing capacity, affecting the service life of the lock assembly.

Based on the above considerations, to address the issues of poor static load-bearing capacity and short service life of the lock assembly, this application designs a lock assembly 100. After a battery 300 is assembled to the lock assembly 100, the gravitational force of the battery 300 is distributed between a first locking member 20 and a second locking member 30. The first locking member 20 and the second locking member 30 share the load, reducing the difference in force distribution between a first rotation shaft 22 and a second rotation shaft 32. This enhances the static load-bearing capacity of the lock assembly 100, and helps extend the service life of the lock assembly 100.

The battery 300 disclosed in the embodiments of this application may be used, but is not limited to, in electric apparatuses 200 such as vehicles, ships, or aircraft.

An embodiment of this application provides an electric apparatus 200 using a battery 300 as a power source. The electric apparatus 200 may be, but is not limited to, a mobile phone, a tablet, a laptop, an electric toy, an electric tool, an electric bicycle, an electric vehicle, a ship, a spacecraft, or the like. The electric toy may include a fixed or mobile electric toy, such as a game console, an electric car toy, an electric ship toy, an electric airplane toy, or the like, and the spacecraft may include an airplane, a rocket, a space shuttle, a spaceship, or the like.

For convenience of description, the following embodiments take an electric apparatus 200 as a vehicle in one embodiment of this application as an example for explanation.

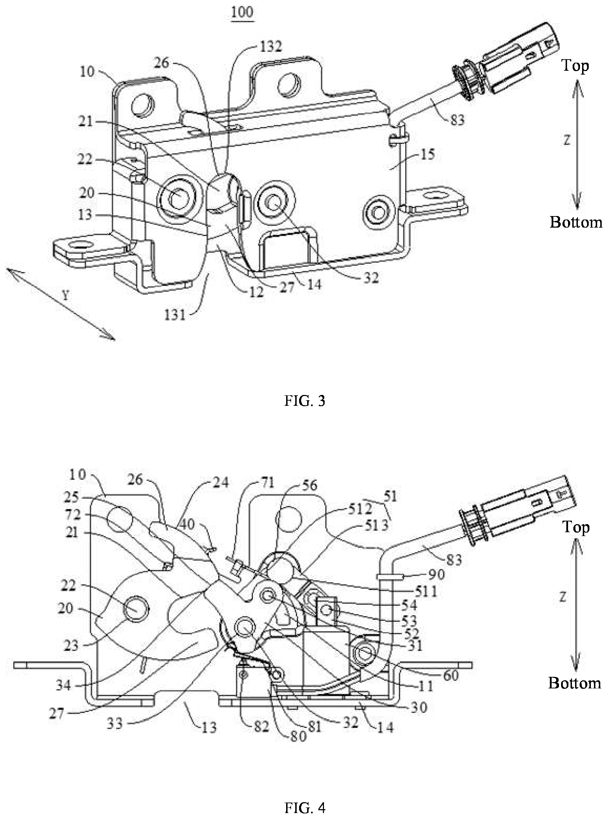

The lock assembly 100 according to the embodiments of this application will be described in detail below with reference to FIGs. 3 to 7. The lock assembly 100 may be mounted on a vehicle, where a lock pin 301 is mounted on a battery 300. Alternatively, the lock assembly 100 may be mounted on the battery 300, where the lock pin 301 is mounted on the vehicle. This application takes the example of the lock assembly 100 being mounted on the vehicle and the lock pin 301 being mounted on the battery 300 for explanation. The lock assembly 100 may be configured to lock or unlock the battery 300, enabling the attachment or detachment of the battery 300. The lock assembly 100 may be mounted on the vehicle, for example, the lock assembly 100 may be mounted on the chassis of the vehicle, and the lock assembly 100 is configured to assemble the battery 300 to fix the battery 300 to the vehicle. When the lock assembly 100 locks the battery 300, the battery 300 is fixed to the vehicle, which can also be understood as the battery 300 being mounted on the vehicle. When the lock assembly 100 unlocks the battery 300, the battery 300 can be detached from the vehicle. However, this application is not limited to this, and the lock assembly 100 may also be configured to lock or unlock other components. This application takes the example of the lock assembly 100 being used to lock or unlock the battery 300 for explanation.

As shown in FIGs. 3 to 7, the lock assembly 100 according to an embodiment of this application includes: a mounting base 10, a first locking member 20, and a second locking member 30. The mounting base 10 includes a first locking wall surface 15, where the first locking wall surface 15 has a lock pin passage groove 13, and the lock pin passage groove 13 is configured to be recessed along a first direction. The first locking member 20 is rotatably disposed on the mounting base 10 along a first rotation shaft 22, where the first locking member 20 includes a first mating portion 25 and a locking groove 21, and a plane passing through an axis of the first rotation shaft 22 and perpendicular to the first locking wall surface 15 is a first plane, the first plane being parallel to the first direction. The second locking member 30 is rotatably disposed on the mounting base 10 along a second rotation shaft 32, where the second locking member 30 includes a second mating portion 34, and a plane passing through an axis of the second rotation shaft 32 and perpendicular to the first locking wall surface 15 is configured as a second plane, the second plane being parallel to the first direction. The lock assembly 100 is configured such that when the first locking member 20 rotates to cause the first mating portion 25 to mate with the second mating portion 34, the first locking member 20 is locked by the second locking member 30, and an overlapping region A of the locking groove 21 and the lock pin passage groove 13, projected in a direction perpendicular to the first locking wall surface 15, is located between the first plane and the second plane.

The mounting base 10 may be fixedly mounted to an electric apparatus 200, for example, the mounting base 10 may be fixedly mounted to a mounting frame of a vehicle, and the mounting base 10 may be mounted to the electric apparatus 200 via bolts. Through the cooperation of the first locking member 20 and the second locking member 30, the battery 300 can be fixedly mounted to the electric apparatus 200, and the battery 300 can also be unlocked to allow removal of the battery 300.

When the lock assembly 100 is positioned as shown in FIG. 3, the first direction refers to a direction Z in FIG. 3, a side wall of the mounting base 10 is configured as the first locking wall surface 15, and the first locking wall surface 15 is provided with the lock pin passage groove 13. The lock pin passage groove 13 is recessed into the first locking wall surface 15 along the first direction, the lock pin passage groove 13 extends along a vertical direction shown in FIG. 3, and the lock pin passage groove 13 penetrates the first locking wall surface 15 in a direction perpendicular to the first locking wall surface 15. This application takes the example of the lock assembly 100 being positioned as shown in FIG. 3 for explanation.

The first locking member 20 is rotatably disposed on the mounting base 10 via the first rotation shaft 22, the first rotation shaft 22 may be fixed to the mounting base 10, and the first locking member 20 has a first pivot hole 23. The first rotation shaft 22 runs through the first pivot hole 23, thereby allowing the first locking member 20 to rotate around a central axis of the first rotation shaft 22. The first locking member 20 includes the first mating portion 25 and the locking groove 21, and an edge of the first locking member 20 may have the locking groove 21, and the locking groove 21 may be a notch structure provided at the edge of the first locking member 20. During mounting of the battery 300, a lock pin 301 on the battery 300 is assembled into the locking groove 21. The first plane passes through the axis of the first rotation shaft 22, the first plane is parallel to the axis of the first rotation shaft 22, and the first plane is perpendicular to the first locking wall surface 15, where the first locking wall surface 15 is parallel or substantially parallel to the first direction.

The second locking member 30 is rotatably disposed on the mounting base 10 via the second rotation shaft 32, the second rotation shaft 32 may be fixed to the mounting base 10, and the second rotation shaft 32 is parallel to the second rotation shaft 22. The second locking member 30 has a second pivot hole 33, and the second rotation shaft 32 runs through the second pivot hole 33, thereby allowing the second locking member 30 to rotate around a central axis of the second rotation shaft 32, achieving the effect of the second locking member 30 being rotatably disposed on the mounting base 10 along the second rotation shaft 32. The second locking member 30 includes the second mating portion 34, the second plane passes through the axis of the second rotation shaft 22, the second plane is perpendicular to the first locking wall surface 15, and the second plane is parallel or substantially parallel to the first direction.

The lock assembly 100 is configured such that when the first locking member 20 rotates to cause the first mating portion 25 to mate with the second mating portion 34, that is, when the first mating portion 25 and the second mating portion 34 are in a locked engagement, the first mating portion 25 abuts against the second mating portion 34 reliably. The first locking member 20 is locked by the second locking member 30, and the overlapping region A of the locking groove 21 and the lock pin passage groove 13, projected in a direction perpendicular to the first locking wall surface 15, is located between the first plane and the second plane.

During mounting of the battery 300 to the lock assembly 100, that is, when the battery 300 needs to be locked, the battery 300 is lifted to move toward the lock assembly 100, and the lock pin 301 of the battery 300 aligns with the lock pin passage groove 13. The lock pin 301 moves into the lock pin passage groove 13 and into the locking groove 21. After the lock pin 301 comes into contact with the first locking member 20, the lock pin 301 continues to move, driving the first locking member 20 to rotate. When the first locking member 20 rotates to a corresponding position, the first mating portion 25 abuts against and mates with the second mating portion 34, the second mating portion 34 supports the first mating portion 25, and the first locking member 20 is locked by the second locking member 30. At this time, the first locking member 20 remains in the corresponding position, the overlapping region A is located between the first plane and the second plane, both the first locking member 20 and the second locking member 30 support the battery 300, and the battery 300 is assembled to the lock assembly 100, completing the mounting of the battery 300.

When the battery 300 needs to be removed from the lock assembly 100, that is, when the battery 300 needs to be unlocked, the second locking member 30 is rotated to separate the first mating portion 25 from the second mating portion 34. Under the gravitational force of the battery 300 and the gravitational force of the first locking member 20 itself, the first locking member 20 rotates toward an unlocking position, and the battery 300 moves downward under its own gravitational force, causing the lock pin 301 of the battery 300 to move out of the locking groove 21, thereby implementing removal of the battery 300. In this application, after the battery 300 is mounted to the lock assembly 100, both the first locking member 20 and the second locking member 30 bear the gravitational force of the battery 300, and the first rotation shaft 22 and the second rotation shaft 32 share the load. Compared to the prior art, the gravitational force of the battery 300 is distributed between the first locking member 20 and the second locking member 30, which can reduce the difference in force distribution between the first rotation shaft 22 and the second rotation shaft 32, improve the load distribution of the lock assembly 100, and enhance the static load-bearing capacity of the lock assembly 100. This reduces the likelihood of faster wear of either the first rotation shaft 22 or the second rotation shaft 32 affecting the service life of the lock assembly 100, helping extend the service life of the lock assembly 100.

In the above technical solution, through provision of the first locking member 20 and the second locking member 30, after the battery 300 is assembled to the lock assembly 100, the gravitational force of the battery 300 is distributed between the first locking member 20 and the second locking member 30. The first locking member 20 and the second locking member 30 share the load, reducing the difference in force distribution between the first rotation shaft 22 and the second rotation shaft 32. This enhances the static load-bearing capacity of the lock assembly 100, and helps extend the service life of the lock assembly 100.

According to some embodiments of this application, as shown in FIGs. 3 and 4, when the first locking member 20 is locked by the second locking member 30, in a direction perpendicular to the first locking wall surface 15, a region in which projections of the first locking member 20 and the lock pin passage groove 13 overlap is denoted as B, and at least part of the region B is located on a side of the region A closer to the first rotation shaft 22.

As shown in FIG. 3, when the lock assembly 100 is positioned as shown in FIG. 3, the direction perpendicular to the first locking wall surface 15 is a direction Y in FIG. 3. When the first locking member 20 is locked by the second locking member 30, in the direction perpendicular to the first locking wall surface 15, the region in which an orthographic projection of the first locking member 20 overlaps with an orthographic projection of the lock pin passage groove 13 is denoted as B, and in a direction parallel to the first locking wall surface 15, at least a portion of the region B is located on the side of the region A closer to the first rotation shaft 22.

In the above technical solution, when the first locking member 20 is locked by the second locking member 30, at least a portion of the region B is located on the side of the region A closer to the first rotation shaft 22, so that the first locking member 20 gradually clamps the lock pin 301 as the first locking member 20 rotates toward a locked state, reducing the vibration of the lock pin 301 after being locked in the locking groove 21.

According to some embodiments of this application, a width dimension of the lock pin passage groove 13 is larger than a width dimension of the lock pin 301, which enables the lock pin 301 to smoothly enter the lock pin passage groove 13 and reduces resistance when the lock pin 301 enters the lock pin passage groove 13.

According to some embodiments of this application, as shown in FIG. 3, the lock pin passage groove 13 includes an open end 131 and a closed end 132, an edge of the first locking member 20 is recessed toward a middle portion in a direction parallel to the first locking wall surface 15 to form the locking groove 21, the first locking member 20 includes a first extension arm 26 and a second extension arm 27 respectively located on two sides of the locking groove 21, the first extension arm 26 is closer to the closed end 132 than the second extension arm 27, and the second extension arm 27 is configured to be at least partially located between the open end 131 and the closed end 132 when the first locking member 20 is locked by the second locking member 30.

As shown in FIG. 3, when the lock assembly 100 is positioned as shown in FIG. 3, in the direction Z in FIG. 3, a lower end of the lock pin passage groove 13 is the open end 131, and an upper end of the lock pin passage groove 13 is the closed end 132. As shown in FIG. 4, the first extension arm 26 and the second extension arm 27 are respectively located on two sides of the locking groove 21, and in the direction Z in FIG. 3, the first extension arm 26 is closer to the closed end 132 than the second extension arm 27. When the first locking member 20 is locked by the second locking member 30, in the direction Z in FIG. 3, at least a portion of the second extension arm 27 is located between the open end 131 and the closed end 132, and in the direction perpendicular to the first locking wall surface 15, an orthographic projection of the second extension arm 27 has a region of overlap with an orthographic projection of the lock pin passage groove 13. When the first locking member 20 is locked by the second locking member 30, at least a portion of the second extension arm 27 is located between the open end 131 and the closed end 132, enabling the second extension arm 27 to bear the lock pin 301.

In the above technical solution, when the first locking member 20 is locked by the second locking member 30, at least a portion of the second extension arm 27 is located between the open end 131 and the closed end 132, enabling the second extension arm 27 to bear the lock pin 301.

According to some embodiments of this application, the first locking member 20 is configured to be rotatable between a first locking position and a first unlocking position. When the first locking member 20 is in the first locking position (that is, the "corresponding position" in the above embodiments), the first locking member 20 is locked by the second locking member 30. When the first locking member 20 is in the first unlocking position, the first locking member 30 disengages from the locking engagement with the second locking member 30.

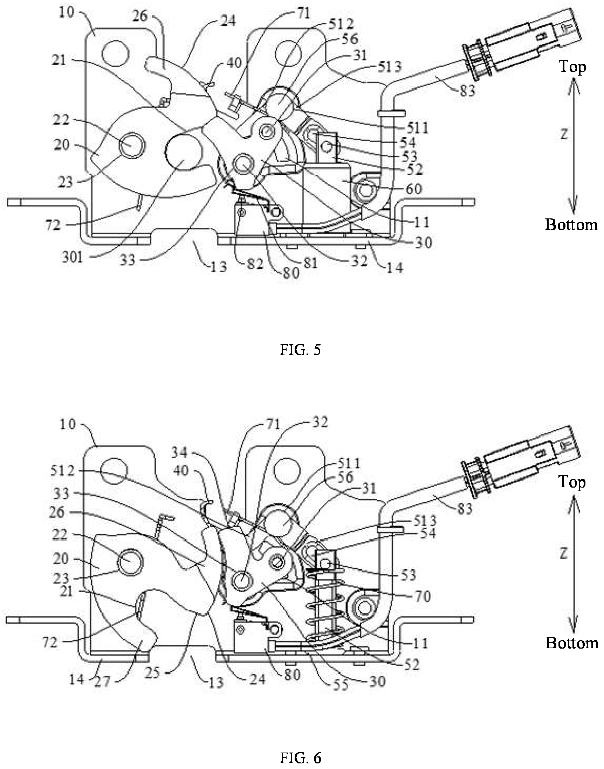

The first locking member 20 has a first unlocking position and a first locking position relative to the mounting base 10, and the first locking member 20 is adapted to rotate around the first rotation shaft 22 to the first unlocking position or the first locking position. It should be noted that as shown in FIG. 6, the "first unlocking position" refers to a position where the lock pin 301 of the battery 300 can be installed into the locking groove 21 during mounting of the battery 300, also a position where the lock pin 301 of the battery 300 can move out of the locking groove 21 during removal of the battery 300. The "first locking position" refers to a position where the lock pin 301 of the battery 300 is installed in the locking groove 21, and in this case, the battery 300 is mounted to the lock assembly 100, which can also be understood as the battery 300 being locked to the lock assembly 100 in the "first locking position".

The first locking member 20 may initially be in the first unlocking position. During mounting of the battery 300 to the lock assembly 100, that is, when the battery 300 needs to be locked, the battery 300 is lifted to move toward the lock assembly 100, and the lock pin 301 of the battery 300 aligns with the locking groove 21. The lock pin 301 moves into the locking groove 21 and comes into contact with the first locking member 20, and then continues to move, driving the first locking member 20 to rotate from the first unlocking position toward the first locking position. When the first locking member 20 rotates to the first locking position, the second locking member 30 supports the first locking member 20, and the first locking member 20 is locked by the second locking member 30, keeping the first locking member 20 in the first locking position. In this case, the first locking member 20 supports the battery 300, and the battery 300 is assembled to the lock assembly 100, completing the mounting of the battery 300. When the battery 300 needs to be removed from the lock assembly 100, that is, when the battery 300 needs to be unlocked, the second locking member 3 is rotated to disengage the lock pin passage from the locking engagement with the second locking member 30. Under the gravitational force of the battery 300 and the gravitational force of the first locking member 20 itself, the first locking member 20 rotates from the first locking position to the first unlocking position, and the battery 300 moves downward under its own gravitational force, causing the lock pin 301 of the battery 300 to move out of the locking groove 21, implementing removal of the battery 300. The first locking member 20 is allowed to rotate between the first locking position and the first unlocking position, allowing the first locking member 20 to be locked by the second locking member 30, and allowing the first locking member 20 to disengage from the locking of the second locking member 30.

In the above technical solution, the first locking member 20 is allowed to rotate between the first locking position and the first unlocking position, allowing the first locking member 20 to be locked by the second locking member 30, and allowing the first locking member 20 to disengage from the locking of the second locking member 30.

According to some embodiments of this application, when the first locking member 20 is in the first unlocking position, in the direction perpendicular to the first locking wall surface 15, a projection of the second extension arm 27 does not overlap with the projection of the lock pin passage groove 13.

As shown in FIGs. 3 and 6, when the first locking member 20 is in the first unlocking position, in the direction perpendicular to the first locking wall surface 15, that is, a direction Y in FIG. 3, an orthographic projection of the second extension arm 27 does not overlap with an orthographic projection of the lock pin passage groove 13, for example, in a direction parallel to the first locking wall surface 15, the second extension arm 27 is located on a side of the lock pin passage groove 13 closer to the first rotation shaft 22. When the first locking member 20 is in the first unlocking position, in the direction perpendicular to the first locking wall surface 15, the second extension arm 27 is entirely out of a projection range of the lock pin passage groove 13. During mounting of the battery 300 to the lock assembly 100, the second extension arm 27 does not interfere with the lock pin 301 that needs to enter the lock pin passage groove 13, allowing the lock pin 301 to smoothly move into the locking groove 21.

In the above technical solution, when the first locking member 20 is in the first unlocking position, the projection of the second extension arm 27 does not overlap with the projection of the lock pin passage groove 13, facilitating the movement of the lock pin 301 into the lock pin passage 13, allowing the battery 300 to be smoothly mounted to the lock assembly 100.

According to some embodiments of this application, as shown in FIG. 4, the first mating portion 25 is located on the first extension arm 26.

As shown in FIG. 4, the first mating portion 25 is disposed on the first extension arm 26. When the first locking member 20 is in the first unlocking position, the second mating portion 34 of the second locking member 30 abuts against the first mating portion 25, thereby locking the first locking member 20.

In the above technical solution, the first mating portion 25 is disposed on the first extension arm 26, so that when the first locking member 20 is in the first locking position, the second locking member 30 locks the first locking member 20 by abutting against the first extension arm 26.

According to some embodiments of this application, the second locking member 30 is disposed on the mounting base 10, the second locking member 30 may be disposed adjacent to the first locking member 20, and the second locking member 30 may support the first locking member 20 or the second locking member 30 may not support the first locking member 20. When the second locking member 30 supports the first locking member 20, the first locking member 20 is in the first locking position, and under the support of the second locking member 30, the first locking member 20 is restricted to the first locking position, locking the lock pin 301 on the battery 300 to the lock assembly 100, implementing the mounting of the battery 300. When the battery 300 needs to be removed from the lock assembly 100, the second locking member 30 is controlled so that such that the second locking member 30 does not support the first locking member 20, the first locking member 20 rotates from the first locking position to the first unlocking position, and the lock pin 301 of the battery 300 moves out of the locking groove 21, implementing removal of the battery 300.

According to some embodiments of this application, as shown in FIGs. 3 and 4, a mounting space 12 may be formed within the mounting base 10, and both the first locking member 20 and the second locking member 30 may be disposed within the mounting space 12. Both the first locking member 20 and the second locking member 30 may be disposed on the first locking wall surface 15 of the mounting space 12. When the lock assembly 100 is positioned as shown in FIG. 3, the lock pin passage groove 13 may be formed on a bottom wall 14 of the mounting base 10, the lock pin passage groove 13 on the bottom wall 14 communicates with the mounting space 12, and the lock pin passage groove 13 on the bottom wall 14 communicates with the lock pin passage groove 13 on the first locking wall surface 15. The lock pin passage groove 13 on the first locking wall surface 15 communicates with the mounting space 12. During mounting of the battery 300, the lock pin 301 of the battery 300 can move into the mounting space 12 through the lock pin passage groove 13 to engage with the first locking member 20.

According to some embodiments of this application, as shown in FIGs. 4 and 6, the second locking member 30 has a second unlocking position and a second locking position relative to the mounting base 10. In the direction perpendicular to the first locking wall surface 15, the second locking member 30, when in the second unlocking position, does not overlap with a maximum rotation range of the first locking member 20. When the second locking member 30 is in the second locking position, the first mating portion 25 mates with the second mating portion 34, so that the first locking member 20 is locked by the second locking member 30.

The second locking member 30 is rotatably disposed on the mounting base 10, and the second locking member 30 has a second unlocking position and a second locking position relative to the mounting base 10. The second locking member 30 can rotate relative to the mounting base 10 to the second unlocking position or the second locking position. When the second locking member 30 is in the second unlocking position, the second locking member 30 does not overlap the maximum rotation range of the first locking member 20, and the second locking member 30 and the first locking member 20 are not locked. When the second locking member 30 is in the second locking position, the first mating portion 25 abuts against and interlocks with the second mating portion 34, so that the first locking member 20 is locked by the second locking member 30. It should be noted that the "second unlocking position" refers to a position of the second locking member 30 relative to the mounting base 10 when it is not locking the first locking member 20, and the "second locking position" refers to a position of the second locking member 30 relative to the mounting base 10 when it is locking the first locking member 20.

When the battery 300 needs to be mounted to the lock assembly 100, the second locking member 30 can be rotated to the second unlocking position. When the first locking member 20 rotates to the first locking position, the second locking member 30 is rotated to the second locking position, at which point the first mating portion 25 abuts against and interlocks with the second mating portion 34, locking the battery 300 to the lock assembly 100. When the battery 300 needs to be removed, the second locking member 30 is rotated to the second unlocking position, at which point the first mating portion 25 separates from the second mating portion 34, allowing the battery 300 to be removed. It should be noted that a drive structure may be provided to drive the movement of the second locking member 30, and the specific structure and arrangement of the drive structure are not specifically limited herein. The second locking member 30 is rotatably disposed on the mounting base 10, facilitating the rotation of the second locking member 30 to the second unlocking position or the second locking position, enabling the lock assembly 100 to meet performance requirements.

In the above technical solution, the second locking member 30 is rotatably disposed on the mounting base 10, so that the second locking member 30 can rotate to the second unlocking position and the second locking position. The second locking member 30 is disposed between the second unlocking position and the second locking position, allowing the second locking member 30 to lock the first locking member 20 and the first locking member 20 to disengage from the locking of the second locking member 30, enabling the lock assembly 100 to meet performance requirements.

According to some embodiments of this application, as shown in FIGs. 4 and 6, the second locking member 30 is adapted to rotate around the second rotation shaft 32 to the second unlocking position or the second locking position.

In one embodiment, the first locking member 20 may be disposed on the first locking wall surface 15 via the first rotation shaft 22, and the second locking member 30 may be disposed on the first locking wall surface 15 via the second rotation shaft 32. The second locking member 30 is rotatably disposed on the mounting base 10, so that the second locking member 30 rotates to the second unlocking position or the second locking position, making it easy to control whether the second locking member 30 locks the first locking member 20, thereby simplifying the structure of the lock assembly 100.

It should be noted that as shown in FIG. 6, when the first locking member 20 is in the first unlocking position, the second locking member 30 is in the second unlocking position; and when the first locking member 20 is in the first locking position, the second locking member 30 is in the second locking position.

In the above technical solution, the second locking member 30 is rotatably disposed on the mounting base 10, so that the second locking member 30 can rotate to the second unlocking position or the second locking position, making it easy to control whether the second locking member 30 locks the first locking member 20, thereby simplifying the structure of the lock assembly 100.

According to some embodiments of this application, as shown in FIGs. 4 and 6, the second locking member 30 has one of a guide post 31 and an arc-shaped guide hole 11, the mounting base 10 has the other of the guide post 31 and the guide hole 11, the guide post 31 is installed in the guide hole 11, and the guide hole 11 surrounds the second rotation shaft 32.

The second locking member 30 is provided with one of the guide post 31 and the arc-shaped guide hole 11, and the mounting base 10 is provided with the other of the guide post 31 and the guide hole 11. That is, when the second locking member 30 is provided with the guide post 31, the mounting base 10 is provided with the guide hole 11; and when the second locking member 30 is provided with the guide hole 11, the mounting base 10 is provided with the guide post 31. As shown in FIG. 4, this application takes the example of the second locking member 30 being provided with the guide post 31 and the mounting base 10 being provided with the guide hole 11 for explanation. The guide hole 11 may be configured as an arc-shaped structure, and the guide hole 11 is disposed around the second rotation shaft 32 in a circumferential direction of the second rotation shaft 32. During the rotation of the second locking member 30 around the central axis of the second rotation shaft 32, the guide post 31 moves along the guide hole 11 within the guide hole 11. Under the guiding cooperation of the guide post 31 and the guide hole 11, the second locking member 30 can only rotate around the second rotation shaft 32, which can reduce the risk of deviation of the second locking member 30, thereby allowing the second locking member 30 to smoothly rotate to the second unlocking position or the second locking position.

In the above technical solution, through the guiding cooperation of the guide post 31 and the guide hole 11, during the rotation of the second locking member 30 around the central axis of the second rotation shaft 32, the guide post 31 moves along the guide hole 11 within the guide hole 11. Under the guiding cooperation of the guide post 31 and the guide hole 11, the second locking member 30 can only rotate around the second rotation shaft 32, which can reduce the risk of deviation of the second locking member 30, thereby allowing the second locking member 30 to smoothly rotate to the second unlocking position or the second locking position.

According to some embodiments of this application, as shown in FIG. 4, the lock assembly 100 may further include: a first reset member 40, where the first reset member 40 is connected between the mounting base 10 and the second locking member 30, and the first reset member 40 is configured to drive the second locking member 30 to rotate from the second unlocking position to the second locking position.

As shown in FIG. 4, the first reset member 40 may be configured as an elastic member, but this application is not limited to this, and the first reset member 40 may alternatively be configured as a reset member of other forms, as long as it can drive the second locking member 30 to rotate from the second unlocking position to the second locking position. This application takes the example of the first reset member 40 being configured as an elastic member for explanation, for example, the first reset member 40 is configured as a spring or a torsion spring. This application takes the example of the first reset member 40 being configured as a torsion spring for explanation. The first reset member 40 may sleeve the second rotation shaft 32, one end of the first reset member 40 is fixedly connected to the mounting base 10, and the other end of the first reset member 40 is connected to the second locking member 30. When the second locking member 30 rotates from the second locking position to the second unlocking position, the first reset member 40 is stretched.

When the lock assembly 100 is not mounted with the battery 300, the first locking member 20 is in the first unlocking position, the second locking member 30 is in the second unlocking position, and the first locking member 20 may abut against the second locking member 30 to keep the second locking member 30 in the second unlocking position. During mounting of the battery 300 to the lock assembly 100, the lock pin 301 drives the first locking member 20 to rotate from the first unlocking position toward the first locking position. When the first locking member 20 rotates to the first locking position, the second locking member 30 aligns with the locking groove 21, and under the tension of the first reset member 40, the second locking member 30 rotates from the second unlocking position to the second locking position. The second locking member 30 locks the first locking member 20, keeping the first locking member 20 in the first locking position. The battery 300 is assembled to the lock assembly 100, completing the mounting of the battery 300. When the battery 300 needs to be removed from the lock assembly 100, the second locking member 30 is rotated from the second locking position to the second unlocking position. Under the gravitational force of the battery 300 and the gravitational force of the first locking member 20 itself, the first locking member 20 rotates from the first locking position to the first unlocking position, implementing removal of the battery 300. The first reset member 40 is connected between the mounting base 10 and the second locking member 30, so that the first reset member 40 can automatically drive the second locking member 30 to rotate from the second unlocking position to the second locking position, thereby implementing automatic locking of the second locking member 30 with the first locking member 20, and further achieving an automatic locking effect of the lock assembly 100.

In the above technical solution, the first reset member 40 is connected between the mounting base 10 and the second locking member 30, the first reset member 40 can automatically drive the second locking member 30 to rotate from the second unlocking position to the second locking position, thereby implementing automatic locking of the second locking member 30 with the first locking member 20, and further achieving an automatic locking effect of the lock assembly 100.

According to some embodiments of this application, as shown in FIG. 4, when the first locking member 20 is in the first unlocking position, an outer peripheral wall of the first locking member 20 abuts against the second locking member 30 to keep the second locking member 30 in the second unlocking position, at which point the first reset member 40 is stretched. During the rotation of the first locking member 20 from the first unlocking position to the first locking position, the outer peripheral wall of the first locking member 20 consistently abuts against the second locking member 30 to keep the second locking member 30 in the second unlocking position. After the first locking member 20 rotates to the first locking position, the second locking member 30 aligns with the locking groove 21, the outer peripheral wall of the first locking member 20 does not overlap with the second locking member 30, the first reset member 40 drives the second locking member 30 to rotate to the second locking position, and the second locking member 30 locks the first locking member 20, implementing locking of the lock assembly 100, thereby achieving the automatic locking effect of the lock assembly 100.

According to some embodiments of this application, as shown in FIG. 4, the lock assembly 100 may further include: a drive assembly, where the drive assembly is mounted to the mounting base 10, and the drive assembly is configured to drive the second locking member 30 to rotate from the second locking position to the second unlocking position.

The drive assembly may be disposed within the mounting space 12 of the mounting base 10, and the drive assembly can drive the second locking member 30 to move from the second locking position to the second unlocking position, for example, the drive assembly can drive the second locking member 30 to rotate from the second locking position to the second unlocking position. The specific structure of the drive assembly can be properly set according to actual conditions, as long as the drive assembly can drive the second locking member 30 to rotate from the second locking position to the second unlocking position. The drive assembly may be configured as the drive structure in the above embodiments. Through provision of the drive assembly, the effect of driving the second locking member 30 to move from the second locking position to the second unlocking position can be achieved, achieving an automatic unlocking effect of the lock assembly 100.

In the above technical solution, through provision of the drive assembly, the effect of driving the second locking member 30 to move from the second locking position to the second unlocking position can be achieved, achieving an automatic unlocking effect of the lock assembly 100.

According to some embodiments of this application, as shown in FIGs. 4 and 6, the drive assembly may include: a drive arm 51 and a drive rod 52, where the drive arm 51 is rotatably disposed on the mounting base 10 via a third rotation shaft 56, the drive rod 52 is connected to the drive arm 51, and the drive rod 52 is configured to drive the drive arm 51 to rotate to drive the second locking member 30 to move from the second locking position to the second unlocking position.

The drive arm 51 is rotatably disposed on the mounting base 10 via the third rotation shaft 56, and the third rotation shaft 56 may be fixed to the mounting base 10, for example, the third rotation shaft 56 may be fixed to the first locking wall surface 15, and the drive arm 51 can rotate around a central axis of the third rotation shaft 56. The third rotation shaft 56 may be parallel to the second rotation shaft 32, the drive arm 51 has a third pivot hole 511, and the third rotation shaft 56 runs through the third pivot hole 511, thereby achieving the effect of the drive arm 51 rotating around the central axis of the third rotation shaft 56. When the second locking member 30 locks the first locking member 20 in the second locking position, causing the lock assembly 100 to be locked, to unlock the lock assembly 100, the drive arm 51 can be rotated to cause the drive arm 51 to push the second locking member 30 to rotate from the second locking position to the second unlocking position, achieving the effect of unlocking the lock assembly 100.

In the above technical solution, through provision of the drive arm 51, when the lock assembly 100 needs to be unlocked, the drive arm 51 can be rotated to cause the drive arm 51 to push the second locking member 30 to move from the second locking position to the second unlocking position, achieving the effect of unlocking the lock assembly 100.

The drive rod 52 may be disposed within the mounting space 12 of the mounting base 10, the drive rod 52 may move relative to the mounting base 10, the drive rod 52 may be drivingly connected to the drive arm 51, or the drive rod 52 may be directly connected to the drive arm 51. During the movement process, the drive rod 52 can drive the drive arm 51 to rotate, thereby causing the drive arm 51 to drive the second locking member 30 to move from the second locking position to the second unlocking position. In some embodiments, the bottom wall 14 of the mounting base 10 may be provided with an avoidance hole, the avoidance hole being disposed opposite the drive rod 52. When the lock assembly 100 needs to be unlocked, an unlocking rod extends into the mounting space 12 through the avoidance hole, and the unlocking rod drives the drive rod 52 to move, causing the drive rod 52 to drive the drive arm 51 to rotate. The drive arm 51 then drives the second locking member 30 to move from the second locking position to the second unlocking position, achieving the effect of unlocking the lock assembly 100.

In the above technical solution, through provision of the drive rod 52, during the movement process, the drive rod 52 can drive the drive arm 51 to rotate, thereby causing the drive arm 51 to drive the second locking member 30 to move from the second locking position to the second unlocking position, achieving the effect of unlocking the lock assembly 100.

According to some embodiments of this application, the drive arm 51 is configured to rotate between a third unlocking position and a third locking position, and the drive arm 51 is configured to drive, when rotating from the third locking position to the third unlocking position, the second locking member to move from the second locking position to the second unlocking position.

When the second locking member 30 locks the first locking member 20 in the second locking position, causing the lock assembly 100 to be locked, to unlock the lock assembly 100, the drive arm 51 can be rotated to cause the drive arm 51 to rotate from the third locking position to the third unlocking position, and the drive arm 51 pushes the second locking member 30 to rotate from the second locking position to the second unlocking position, achieving the effect of unlocking the lock assembly 100.

In the above technical solution, the drive arm 51 is driven to change position between the third unlocking position and the third locking position, so that the second locking 30 is driven to change position, thereby changing the position of the first locking member 20, achieving the unlocking or locking of the lock assembly 100.

According to some embodiments of this application, as shown in FIGs. 4 and 6, the drive arm 51 can drive the second locking member 30 to move from the second locking position to the second unlocking position via the guide post 31. Specifically, the drive arm 51 is disposed opposite the guide post 31. When the lock assembly 100 needs to be unlocked, the drive arm 51 is driven to cause the drive arm 51 to rotate from the third locking position to the third unlocking position, making the drive arm 51 push the guide post 31 to move along the guide hole 11. During the movement process, the guide post 31 drives the second locking member 30 to move from the second locking position to the second unlocking position, achieving the effect of unlocking the lock assembly 100.

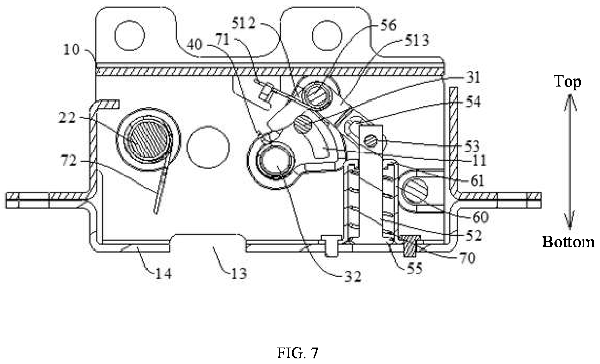

According to some embodiments of this application, as shown in FIG. 7, the lock assembly 100 may further include: a second reset member 71, where the second reset member 71 is connected between the mounting base 10 and the drive arm 51, and the second reset member 71 is configured to move from the third unlocking position to the third locking position.

The second reset member 71 may be configured as an elastic member, but this application is not limited to this, and the second reset member 71 may alternatively be configured as a reset member of other forms, as long as it can drive the drive arm 51 to rotate from the third unlocking position to the third locking position, that is, reset the drive arm 51. This application takes the example of the second reset member 71 being configured as an elastic member for explanation. For example, the second reset member 71 is configured as a spring or a torsion spring. This application takes the example of the second reset member 71 being configured as a torsion spring for explanation.

The second reset member 71 may sleeve the third rotation shaft 56, one end of the second reset member 71 is fixedly connected to the mounting base 10, and the other end of the second reset member 71 is connected to the drive arm 51. When the drive arm 51 rotates to drive the second locking member 30 to rotate from the second locking position to the second unlocking position, the second reset member 71 is stretched. After the unlocking rod separates from the drive rod 52, under the force of the second reset member 71, the drive arm 51 is driven to rotate from the third unlocking position to the third locking position, resetting the drive arm 51.

In the above technical solution, through provision of the second reset member 71, after the drive arm 51 moves to the third unlocking position, causing the lock assembly 100 to switch to an unlocked state, the drive arm 51 can return to the third locking position to await the next locking action.

According to some embodiments of this application, the drive rod 52 is configured to move between a fourth unlocking position and a fourth locking position, and the drive rod 52 is configured to drive, when moving from the fourth locking position to the fourth unlocking position, the drive arm 51 to move from the third locking position to the third unlocking position.

When the lock assembly 100 is in a locked state and the lock assembly 100 needs to be unlocked, the drive rod 52 is driven to move from the fourth locking position to the fourth unlocking position. During the movement from the fourth locking position to the fourth unlocking position, the drive rod 52 drives the drive arm 51 to rotate from the third locking position to the third unlocking position. During the rotation process, the drive arm 51 can drive the second locking member 30 to rotate from the second locking position to the second unlocking position, implementing the unlocking of the first locking member 20, thereby implementing the unlocking of the lock assembly 100.

In the above technical solution, the position change of the drive rod 52 between the fourth unlocking position and the fourth locking position drives the drive arm 51 to change position between the third locking position and the third unlocking position. The drive rod 52 drives the drive arm 51 to move to drive the second locking member 30 to move to an unlocked state, enabling the first locking member 20 to complete unlocking.

According to some embodiments of this application, as shown in FIGs. 4 and 6, the drive rod 52 is movably disposed on the mounting base 10, the drive rod 52 has one of a mounting post 53 and a strip-shaped hole 54, the drive arm 51 has the other of the mounting post 53 and the strip-shaped hole 54, and the mounting post 53 is movably installed in the strip-shaped hole 54.

The drive rod 52 is disposed on the mounting base 10, and the drive rod 52 is movable relative to the mounting base 10. The drive rod 52 may be directly movably mounted to the mounting base 10, or the drive rod 52 may be movably mounted to the mounting base 10 via other components. When the drive rod 52 has the mounting post 53, the drive arm 51 has the strip-shaped hole 54; and when the drive rod 52 has the strip-shaped hole 54, the drive arm 51 has the mounting post 53. This application takes the example of the drive rod 52 having the mounting post 53 and the drive arm 51 having the strip-shaped hole 54 for explanation. The mounting post 53 is installed in the strip-shaped hole 54, the strip-shaped hole 54 may be an elongated hole 54, and the mounting post 53 can move relative to the drive arm 51 along the strip-shaped hole 54. As shown in FIG. 4, when the lock assembly 100 is positioned as shown in FIG. 4, the drive rod 52 is movable relative to the mounting base 10 along a height direction of the lock assembly 100, and the drive rod 52 drives the drive arm 51 to rotate by moving along the height direction of the lock assembly 100. With provision of the mounting post 53 and the strip-shaped hole 54, the drive rod 52 and the drive arm 51 can be connected. When the drive rod 52 drives the drive arm 51 to rotate along the height direction of the lock assembly 100, the mounting post 53 can move along the strip-shaped hole 54. This can reduce the likelihood of jamming at the joint between the drive rod 52 and the drive arm 51, allowing the drive rod 52 to smoothly drive the drive arm 51 to rotate during movement.

In the above technical solution, through provision of the mounting post 53 and the strip-shaped hole 54, the drive rod 52 and the drive arm 51 can be connected. When the drive rod 52 drives the drive arm 51 to rotate along the height direction of the lock assembly 100, the mounting post 53 can move along the strip-shaped hole 54. This can reduce the likelihood of jamming at the joint between the drive rod 52 and the drive arm 51, allowing the drive rod 52 to smoothly drive the drive arm 51 to rotate during movement.

According to some embodiments of this application, as shown in FIGs. 4 and 6, the drive arm 51 may include: a first sub-arm 512 and a second sub-arm 513 connected to each other. An included angle is formed between the first sub-arm 512 and the second sub-arm 513, and a third pivot hole 511 may be formed at a joint between the first sub-arm 512 and the second sub-arm 513. When the drive arm 51 drives the second locking member 30 to rotate, the first sub-arm 512 can abut against the second rotation shaft 32 to drive the second locking member 30 to rotate, the second sub-arm 513 is provided with the strip-shaped hole 54, and the second sub-arm 513 is assembled with the drive rod 52. With the included angle formed between the first sub-arm 512 and the second sub-arm 513, when the drive rod 52 drives the drive arm 51 to rotate, a small movement of the drive rod 52 can cause the first sub-arm 512 to push the second rotation shaft 32 to move, allowing the first sub-arm 512 to push the second rotation shaft 32 to move along the guide hole 11.

According to some embodiments of this application, as shown in FIGs. 4 and 7, the lock assembly 100 may further include: a guide sleeve 60, where the guide sleeve 60 is fixedly disposed on the mounting base 10, and the drive rod 52 runs through the guide sleeve 60, so that the drive rod 52 can move axially along the guide sleeve 60.

The guide sleeve 60 may be disposed within the mounting space 12 of the mounting base 10, and the guide sleeve 60 may be fixed to the mounting base 10 via bolts, for example, the guide sleeve 60 may be fixedly mounted to the bottom wall 14 of the mounting base 10 via bolts. When the lock assembly 100 is positioned as shown in FIG. 4, a lower end of the guide sleeve 60 is open, the guide sleeve 60 is disposed opposite the avoidance hole, the guide sleeve 60 may cover the avoidance hole, the guide sleeve 60 sleeves an outer side of the drive rod 52, and the drive rod 52 may abut against an inner peripheral wall of the guide sleeve 60. An axial direction of the guide sleeve 60 is consistent with the height direction of the lock assembly 100. During the axial movement of the drive rod 52 along the guide sleeve 60, through the abutment of the drive rod 52 against the inner peripheral wall of the guide sleeve 60, the guide sleeve 60 can guide the drive rod 52 to move in the height direction of the lock assembly 100, reducing the risk of tilting of the drive rod 52 and the risk of deviation of the drive rod 52, thereby allowing the lock assembly 100 to unlock smoothly. Additionally, the guide sleeve 60 sleeving the drive rod 52 can improve the dustproof effect of the lock assembly 100, reducing the risk of dust and other substances entering the mounting space 12 through the avoidance hole.

In the above technical solution, through the guiding cooperation of the guide sleeve 60 and the drive rod 52, when the position of the drive rod 52 changes between the fourth unlocking position and the fourth locking position, the guide sleeve 60 can guide the drive rod 52 to move in the height direction of the lock assembly 100, reducing the risk of tilting of the drive rod 52 and the risk of deviation of the drive rod 52, thereby allowing the lock assembly 100 to unlock smoothly. Additionally, the guide sleeve 60 sleeving the drive rod 52 can improve the dustproof effect of the lock assembly 100, reducing the risk of dust and other substances entering the mounting space 12 through the avoidance hole.

According to some embodiments of this application, as shown in FIGs. 4 and 7, the drive rod 52 is configured to move axially along the guide sleeve 60 between the fourth unlocking position and the fourth locking position, and the lock assembly 100 further includes a third reset member 70, where the third reset member 70 is disposed within the guide sleeve 60, and the third reset member 70 is configured to drive the drive rod 52 to move from the fourth unlocking position to the fourth locking position.

The third reset member 70 is disposed within the guide sleeve 60, and the third reset member 70 can drive the drive rod 52 to reset, that is, the third reset member 70 can drive the drive rod 52 to move from the fourth unlocking position to the fourth locking position. As shown in FIG. 7, when the lock assembly 100 is positioned as shown in FIG. 7, to drive the second locking member 30 to rotate to the second unlocking position, that is, to unlock the lock assembly 100, the drive rod 52 moves from the fourth locking position to the fourth unlocking position, that is, the drive rod 52 moves upward, the drive rod 52 drives the drive arm 51 to rotate toward the second rotation shaft 32, and the drive arm 51 drives the second locking member 30 to rotate to the second unlocking position, implementing the unlocking of the lock assembly 100. Through provision of the third reset member 70, after the lock assembly 100 is unlocked, the third reset member 70 drives the drive rod 52 to move from the fourth unlocking position to the fourth locking position, that is, the third reset member 70 drives the drive rod 52 to move downward, thereby resetting the drive rod 52. During the resetting of the drive rod 52, the drive rod 52 can drive the drive arm 51 to rotate in a direction leaving the second rotation shaft 32, thereby resetting the drive arm 51. It should be noted that the third reset member 70 may be configured as a cylinder, or the third reset member 70 may be configured as a linear motor. However, this application is not limited thereto, and the third reset member 70 may alternatively be configured as a reset member of other forms, as long as it can drive the drive rod 52 to reset.

In the above technical solution, through provision of the third reset member 70, after the lock assembly 100 is unlocked, the third reset member 70 drives the drive rod 52 to move from the fourth unlocking position to the fourth locking position, thereby resetting the drive rod 52. During the resetting of the drive rod 52, the drive rod 52 can drive the drive arm 51 to rotate in a direction leaving the second rotation shaft 32, thereby resetting the drive arm 51.

According to some embodiments of this application, as shown in FIG. 7, the third reset member 70 is an elastic member, one end of the drive rod 52 is located within the guide sleeve 60 and has a stop flange 55, the guide sleeve 60 has a stop wall 61 opposite the stop flange 55, the drive rod 52 runs through the stop wall 61, and the third reset member 70 is located between the stop wall 61 and the stop flange 55.

The third reset member 70 may be configured as an elastic member, for example, the third reset member 70 may be configured as a spring or a torsion spring. This application takes the example of the third reset member 70 being configured as a spring for explanation. One end of the drive rod 52 is located within the guide sleeve 60, an end portion of the drive rod 52 located within the guide sleeve 60 may have the stop flange 55, and an upper end of the guide sleeve 60 may have the stop wall 61 opposite the stop flange 55. The drive rod 52 runs through the stop wall 61. The third reset member 70 is located between the stop wall 61 and the stop flange 55. The third reset member 70 may sleeve the drive rod 52, where one end of the third reset member 70 may abut against the stop wall 61, and the other end of the third reset member 70 may abut against the stop flange 55.

When it is necessary to drive the second locking member 30 to rotate from the second locking position to the second unlocking position, that is, when it is necessary to unlock the lock assembly 100, the drive rod 52 moves upward, the third reset member 70 is compressed and has elastic force, while the drive rod 52 drives the drive arm 51 to rotate toward the second rotation shaft 32, and the drive arm 51 drives the second locking member 30 to rotate to the second unlocking position, implementing the unlocking of the lock assembly 100. After the lock assembly 100 is unlocked, since the third reset member 70 is compressed and has elasticity, the third reset member 70 drives the drive rod 52 to move downward, thereby resetting the drive rod 52. During the resetting of the drive rod 52, the drive rod 52 can drive the drive arm 51 to rotate in a direction leaving the second rotation shaft 32, thereby resetting the drive arm 51. The third reset member 70 is configured as an elastic member, which can simplify the structure of the third reset member 70, and achieve the effect of automatically driving the drive rod 52 to reset, allowing the drive rod 52 to return to its position accurately.

In the above technical solution, the third reset member 70 is configured as an elastic member, which can simplify the structure of the third reset member 70, reduce the manufacturing cost of the lock assembly 100, and achieve the effect of automatically driving the drive rod 52 to reset, allowing the drive rod 52 to return to its position accurately. Additionally, the third reset member 70 is disposed between the stop wall 61 and the stop flange 55, so that when the lock assembly 100 is unlocked, the third reset member 70 can be compressed, thereby allowing the drive rod 52 to reset smoothly.

According to some embodiments of this application, as shown in FIG. 7, the second reset member 71 is connected between the mounting base 10 and the drive arm 51 and sleeves an outer side of the third rotation shaft 56, and the second reset member 71 is configured to drive the drive arm 51 to rotate from the third locking position to the third locking position.

The second reset member 71 may be configured as an elastic member, but this application is not limited to this. The second reset member 71 may alternatively be configured as a reset member of other forms, as long as it can drive the drive arm 51 to rotate in a direction leaving the guide post 31, that is, reset the drive arm 51. This application takes the example of the second reset member 71 being configured as an elastic member for explanation, for example, the second reset member 71 is configured as a spring or a torsion spring. This application takes the example of the second reset member 71 being configured as a torsion spring for explanation.

The second reset member 71 may sleeve the third rotation shaft 56, one end of the second reset member 71 is fixedly connected to the mounting base 10, and the other end of the second reset member 71 is connected to the drive arm 51. When the drive arm 51 rotates to drive the second locking member 30 to rotate from the second locking position to the second unlocking position, the second reset member 71 is stretched. After the unlocking rod separates from the drive rod 52, under the force of the second reset member 71, the drive arm 51 is driven to rotate to an initial position, resetting the drive arm 51. During the resetting of the drive arm 51, the drive arm 51 can drive the drive rod 52 to reset, thereby allowing the drive rod 52 to reset smoothly.

In the above technical solution, through provision of the second reset member 71, when the drive arm 51 rotates to drive the second locking member 30 to rotate from the second locking position to the second unlocking position, the second reset member 71 is stretched. After the unlocking rod separates from the drive rod 52, under the force of the second reset member 71, the drive arm 51 is driven to rotate to the initial position, resetting the drive arm 51. During the resetting of the drive arm 51, the drive arm 51 can drive the drive rod 52 to reset, thereby allowing the drive rod 52 to reset smoothly.

According to some embodiments of this application, as shown in FIG. 7, the lock assembly 100 may further include: a fourth reset member 72, where the fourth reset member 72 is connected between the mounting base 10 and the first locking member 20, and the fourth reset member 72 is configured to drive the first locking member 20 to rotate from the first locking position to the first unlocking position.

The fourth reset member 72 may be configured as an elastic member, but this application is not limited to this. The fourth reset member 72 may alternatively be configured as a reset member of other forms, as long as it can drive the first locking member 20 to rotate from the first locking position to the first unlocking position. This application takes the example of the fourth reset member 72 being configured as an elastic member for explanation, for example, the fourth reset member 72 is configured as a spring or a torsion spring. This application takes the example of the fourth reset member 72 being configured as a torsion spring for explanation.

The fourth reset member 72 may sleeve on the first rotation shaft 22, one end of the fourth reset member 72 is fixedly connected to the mounting base 10, and the other end of the fourth reset member 72 is connected to the first locking member 20. After the first locking member 20 rotates from the first unlocking position to the first locking position, the fourth reset member 72 is stretched. After the second locking member 30 rotates from the second locking position to the second unlocking position, under the force of the fourth reset member 72, the first locking member 20 can be driven to rotate from the first locking position to the first unlocking position, allowing the first locking member 20 to return to its position stably.

In the above technical solution, through provision of the fourth reset member 72, the fourth reset member 72 can drive the first locking member 20 to rotate from the first locking position to the first unlocking position, allowing the first locking member 20 to return to its position stably, thereby allowing the lock assembly 100 to unlock smoothly.

It should be noted that the lock assembly 100 may also be provided with the first reset member 40, the third reset member 70, the second reset member 71, and the fourth reset member 72, or the lock assembly 100 may be provided with at least one of the first reset member 40, the third reset member 70, the second reset member 71, and the fourth reset member 72.

According to some embodiments of this application, as shown in FIG. 4, the first extension arm 26 further includes a first arc surface 24 centered on the first rotation shaft 22, the first arc surface 24 facing the second locking member 30 when the first locking member 20 is in the first unlocking position.

As shown in FIG. 4, the first locking member 20 and the second locking member 30 are disposed adjacent to each other, an outer peripheral wall of the first extension arm 26 has the first arc surface 24 adapted to abut against the second locking member 30, and the second locking member 30 abuts against the first arc surface 24 when in the second unlocking position. During the rotation of the first locking member 20 from the first locking position to the first unlocking position, as shown in FIG. 4, during the clockwise rotation of the first locking member 20 from the first locking position to the first unlocking position, the second locking member 30 abuts against the first arc surface 24, and when the first locking member 20 rotates to the first unlocking position, the second locking member 30 still abuts against the first arc surface 24, keeping the second locking member 30 in the second unlocking position. During the rotation of the first locking member 20 from the first unlocking position to the first locking position, as shown in FIG. 6, during the counterclockwise rotation of the first locking member 20 from the first unlocking position to the first locking position, the second locking member 30 abuts against the first arc surface 24, keeping the second locking member 30 in the second unlocking position. When the first locking member 20 rotates to the first locking position, the second locking member 30 aligns with the locking groove 21, the first arc surface 24 of the first locking member 20 does not overlap with the second locking member 30, the first reset member 40 drives the second locking member 30 to rotate to the second locking position, and the second locking member 30 locks the first locking member 20, implementing locking of the lock assembly 100, thereby achieving the automatic locking effect of the lock assembly 100.

It should be noted that if a normal line of a contact surface between the second locking member 30 and the first locking member 20 does not always pass through a rotation center of the first locking member 20, a component force of the pressure exerted by the second locking member 30 on the first locking member 20 may exist. The component force may restrict the rotation of the first locking member 20 toward the first unlocking position, potentially causing the first locking member 20 to fail to return to its position accurately.

In this application, since the outer peripheral wall of the first locking member 20 has the arc-shaped first arc surface 24, during the unlocking process of the lock assembly 100, a normal line of a contact surface between the second locking member 30 and the first locking member 20 always passes through the rotation center of the first locking member 20, which can also be understood as the normal line of the contact surface between the second locking member 30 and the first locking member 20 always passing through a central axis of the first rotation shaft 22. This ensures that the pressure exerted by the second locking member 30 on the first locking member 20 always passes through the rotation center of the first locking member 20, with no additional component force interfering with the unlocking process. The fourth reset member 72 only needs to overcome the frictional force of the movement of the first locking member 20, allowing the first locking member 20 to stably rotate from the first locking position to the first unlocking position, ensuring that the first locking member 20 returns to its position accurately. Additionally, during the unlocking process of the lock assembly 100, the second locking member 30 abuts against the first arc surface 24, keeping the position of the second locking member 30 stable.

In the above technical solution, through provision of the first arc surface 24 on the first extension arm 26, during the unlocking process of the lock assembly 100, the normal line of the contact surface between the second locking member 30 and the first locking member 20 always passes through the rotation center of the first locking member 20, which can also be understood as the normal line of the contact surface between the second locking member 30 and the first locking member 20 always passing through the central axis of the first rotation shaft 22. This ensures that the pressure exerted by the second locking member 30 on the first locking member 20 always passes through the rotation center of the first locking member 20, with no additional component force interfering with the unlocking process.

According to some embodiments of this application, the first arc surface 24 is configured to be at least partially in contact with the second locking member 30 when the first locking member 20 is in the first unlocking position.

As shown in FIG. 6, when the first locking member 20 is in the first unlocking position, at least a portion of the first arc surface 24 is in contact with the second locking member 30. With at least a portion of the first arc surface 24 in contact with the second locking member 30 when the first locking member 20 is in the first unlocking position, during the unlocking process of the lock assembly 100, the second locking member 30 abuts against the first arc surface 24, keeping the position of the second locking member 30 stable. Additionally, during the unlocking process of the lock assembly 100, the normal line of the contact surface between the second locking member 30 and the first locking member 20 always passes through the rotation center of the first locking member 20, which can also be understood as the normal line of the contact surface between the second locking member 30 and the first locking member 20 always passing through the central axis of the first rotation shaft 22. This ensures that the pressure exerted by the second locking member 30 on the first locking member 20 always passes through the rotation center of the first locking member 20, with no additional component force interfering with the unlocking process.

In the above technical solution, when the first locking member 20 is in the first unlocking position, the first arc surface 24 is in contact with the second locking member 30, so that during the unlocking process of the lock assembly 100, the normal line of the contact surface between the second locking member 30 and the first locking member 20 always passes through the rotation center of the first locking member 20, which can also be understood as the normal line of the contact surface between the second locking member 30 and the first locking member 20 always passing through the central axis of the first rotation shaft 22. This ensures that the pressure exerted by the second locking member 30 on the first locking member 20 always passes through the rotation center of the first locking member 20, with no additional component force interfering with the unlocking process. Additionally, the second locking member 30 abuts against the first arc surface 24, keeping the position of the second locking member 30 stable.

According to some embodiments of this application, as shown in FIGs. 4 and 6, the lock assembly 100 may further include: a detection switch 80, where the detection switch 80 is configured to be triggered when the first locking member 20 moves from the first locking position to the first unlocking position, and/or the detection switch 80 is configured to be triggered when the first locking member 20 moves from the first unlocking position to the first locking position.

The detection switch 80 may be a micro switch, and the detection switch 80 may be configured to be triggered when the first locking member 20 moves from the first locking position to the first unlocking position, or the detection switch 80 may be configured to be triggered when the first locking member 20 moves from the first unlocking position to the first locking position, or the detection switch 80 may be configured to be triggered both when the first locking member 20 moves from the first locking position to the first unlocking position and when the first locking member 20 moves from the first unlocking position to the first locking position. This application takes the example of the detection switch 80 being configured to be triggered both when the first locking member 20 moves from the first locking position to the first unlocking position and when the first locking member 20 moves from the first unlocking position to the first locking position for explanation. When the first locking member 20 moves from the first locking position to the first unlocking position, the detection switch 80 is triggered, allowing monitoring of the lock assembly 100 in an unlocked state. When the detection switch 80 is configured to be triggered when the first locking member 20 moves from the first unlocking position to the first locking position, the detection switch 80 is triggered, allowing monitoring of the lock assembly 100 in a locked state.

In the above technical solution, provision of the detection switch 80 facilitates monitoring the switching of the lock assembly 100 between the locked state and the unlocked state.

According to some embodiments of this application, as shown in FIGs. 4 and 6, the detection switch 80 is fixedly disposed on the mounting base 10 and corresponds to the second locking member 30, so that the detection switch 80 is triggered by the second locking member 30 when the first locking member 20 is locked by the second locking member 30, and/or so that the detection switch 80 is triggered by the second locking member 30 when the first locking member 20 is disengaged from the second locking member 30.

When the first locking member 20 is locked by the second locking member 30, the second locking member 30 triggers the detection switch 80, and the lock assembly 100 is in a locked state. When the first locking member 20 is disengaged from the second locking member 30, the second locking member 30 triggers the detection switch 80, and the lock assembly 100 is in an unlocked state. The detection switch 80 is triggered by the second locking member 30 when the first locking member 20 is locked by the second locking member 30, or when the first locking member 20 is disengaged from the second locking member 30, or both when the first locking member 20 is locked by the second locking member 30 and when the first locking member 20 is disengaged from the second locking member 30.

The detection switch 80 is fixedly disposed on the mounting base 10 and corresponds to the second locking member 30, and the detection switch 80 is configured to cooperate with the second locking member 30 to detect whether the lock assembly 100 is locked or unlocked. The detection switch 80 may be disposed within the mounting space 12, the detection switch 80 may be fixedly disposed on the bottom wall 14 of the mounting base 10, and the detection switch 80 is disposed opposite the second locking member 30, with the detection switch 80 located between the second locking member 30 and the bottom wall 14 of the mounting base 10. The detection switch 80 has a first contact end 81 and a second contact end 82, where the first contact end 81 is adapted to abut against the second locking member 30. When the lock assembly 100 is locked, the first locking member 20 is locked by the second locking member 30, and the second locking member 30 triggers the detection switch 80, detecting that the lock assembly 100 is in a locked state. When the lock assembly 100 is unlocked, the second locking member 30 does not lock the first locking member 20, and the second locking member 30 triggers the detection switch 80, detecting that the lock assembly 100 is in an unlocked state.

In the above technical solution, the detection switch 80 is not in direct contact with the first locking member 20 for detection, but indirectly monitors the switching of the first locking member 20 between the locked state and the unlocked state through the second locking member 30. This can reduce the probability of false triggering of the detection switch 80 caused by the lock pin 301 vibrating and causing the first locking member 20 to move, thereby minimizing detection errors.

According to some embodiments of this application, the detection switch 80 may be connected to a controller via a wire harness 83, and the wire harness 83 may be fixed to the mounting base 10 using a cable tie 90. One end of the wire harness 83 is located within the mounting space 12 and connected to the detection switch 80, and the other end of the wire harness 83 is located outside the mounting base 10 and connected to the controller. When the lock assembly 100 is locked, that is, the first locking member 20 is in the first locking position and the second locking member 30 is in the second locking position, the first contact end 81 and the second contact end 82 are separated, and the controller detects that the lock assembly 100 is in a locked state. When the lock assembly 100 is unlocked, that is, the second locking member 30 is in the second unlocking position, the second locking member 30 drives the first contact end 81 to contact the second contact end 82, the controller can receive an unlocking signal, and the controller detects that the lock assembly 100 is in an unlocked state, thereby facilitating monitoring of the lock assembly 100 in the locked state and the unlocked state. Additionally, through provision of the detection switch 80, during the unlocking process of the lock assembly 100, whether the lock assembly 100 is fully unlocked can be detected; and during the locking process of the lock assembly 100, whether the lock assembly 100 is fully locked can be detected.

During the unlocking process of the lock assembly 100, the second locking member 30 abuts against the first arc surface 24, keeping the position of the second locking member 30 stable, and keeping the first contact end 81 and the second contact end 82 in contact. This can improve the stability of the signals transmitted by the detection switch 80 to the controller.

In the above technical solution, provision of the detection switch 80 facilitates monitoring of the lock assembly 100 in the locked state and the unlocked state. Additionally, during the unlocking process of the lock assembly 100, whether the lock assembly 100 is fully unlocked can be detected; and during the locking process of the lock assembly 100, whether the lock assembly 100 is fully locked can be detected.

According to some embodiments of this application, this application further provides a mounting bracket (not shown in the figures). The mounting bracket is configured to mount a battery 300 to an electric apparatus 200. The mounting bracket includes the foregoing lock assembly 100, where the lock assembly 100 is configured to be detachably connected to the battery 300.

According to some embodiments of this application, this application further provides a battery 300, where the battery 300 includes the foregoing lock assembly 100, and the lock assembly 100 is configured to detachably mount the battery 300 to an electric apparatus 200.

According to some embodiments of this application, this application further provides an electric apparatus 200 including the battery 300 and the lock assembly 100 according to any of the above solutions. The battery 300 is detachably mounted to the electric apparatus 200 via the lock assembly 100.

The electric apparatus 200 may be any device or system using the lock assembly 100 according to any one of the above embodiments. For example, the electric apparatus 200 may be a vehicle.

According to some embodiments of this application, as shown in FIGs. 4 and 5, this application provides a lock assembly 100, where the lock assembly 100 includes a mounting base 10, a first locking member 20, a second locking member 30, a first reset member 40, a drive assembly, a guide sleeve 60, a third reset member 70, a second reset member 71, a detection switch 80, and a fourth reset member 72. The first locking member 20, the second locking member 30, the first reset member 40, the drive assembly, the guide sleeve 60, the third reset member 70, the second reset member 71, the detection switch 80, and the fourth reset member 72 are all disposed within a mounting space 12 of the mounting base 10. The first locking member 20 and the second locking member 30 are disposed adjacent to each other, the first locking member 20 is rotatably disposed on a first locking wall surface 15 via a first rotation shaft 22, the second locking member 30 is rotatably disposed on the first locking wall surface 15 via a second rotation shaft 32, and a drive arm 51 of the drive assembly is rotatably disposed on the first locking wall surface 15 via a third rotation shaft 56. The guide sleeve 60 is fixed to a bottom wall 14 of the mounting base 10, the guide sleeve 60 sleeves a drive rod 52, and the drive rod 52 is connected to the drive arm 51. The third reset member 70 is disposed within the guide sleeve 60 and sleeves the drive rod 52, the first reset member 40 is connected between the mounting base 10 and the second locking member 30, the second reset member 71 is connected between the mounting base 10 and the drive arm 51, and the fourth reset member 72 is connected between the mounting base 10 and the first locking member 20. An outer peripheral wall of a first extension arm 26 has a first arc surface 24 adapted to abut against the second locking member 30. The detection switch 80 is disposed between the second locking member 30 and the bottom wall 14 of the mounting base 10.

Specifically, as shown in FIG. 6, during unlocking of the lock assembly 100, the first locking member 20 is in a first unlocking position, the second locking member 30 is in a second unlocking position, the first arc surface 24 abuts against the second locking member 30, the drive arm 51 is in a third locking position, the drive rod 52 is in a fourth locking position, and the second locking member 30 can abut against a first contact end 81 of the detection switch 80, causing the first contact end 81 to come into contact with a second contact end 82. During locking of the lock assembly 100, the first locking member 20 rotates counterclockwise from the position shown in FIG. 6 toward the first locking position. When the first locking member 20 rotates to the first locking position, the first reset member 40 drives the second locking member 30 to rotate counterclockwise from the second unlocking position to the second locking position as shown in FIG. 6, and the second locking member 30 locks the first locking member 20, achieving the locking effect of the lock assembly 100.

As shown in FIG. 4, during unlocking of the lock assembly 100, the drive rod 52, under the action of an external unlocking member, moves from the fourth locking position to the fourth unlocking position, driving the drive arm 51 to rotate from the third locking position to the third unlocking position. When the drive arm 51 rotates, it drives the second locking member 30 to rotate from the second locking position to the second unlocking position, making the rotation range of the first locking member 20 totally not overlap with the second locking member 30. The fourth reset member 72 drives the first locking member 20 to rotate from the first locking position to the first unlocking position, implementing the unlocking of the lock assembly 100. During the rotation of the first locking member 20, the second locking member 30 keeps abutting against the first arc surface 24, while the second locking member 30 drives the first contact end 81 to come into contact with the second contact end 82. The second reset member 71 drives the drive arm 51 to reset, and the third reset member 70 drives the drive rod 52 to reset.

It should be noted that, without conflict, the embodiments and features in the embodiments in this application may be combined with each other.

The foregoing descriptions are merely preferred embodiments of this application which are not intended to limit this application. Persons skilled in the art understand that this application may have various modifications and variations. Any modifications, equivalent replacements, and improvements made without departing from the spirit and principle of this application shall fall within the protection scope of this application.

## Claims

1. A lock assembly, comprising:
a mounting base, comprising a first locking wall surface, wherein the first locking wall surface has a lock pin passage groove, and the lock pin passage groove is configured to be recessed along a first direction;
a first locking member, rotatably disposed on the mounting base along a first rotation shaft, wherein the first locking member comprises a first mating portion and a locking groove, and a plane passing through an axis of the first rotation shaft and perpendicular to the first locking wall surface is a first plane, the first plane being parallel to the first direction; and
a second locking member, rotatably disposed on the mounting base along a second rotation shaft, wherein the second locking member comprises a second mating portion, and a plane passing through an axis of the second rotation shaft and perpendicular to the first locking wall surface is configured as a second plane, the second plane being parallel to the first direction; wherein
the lock assembly is configured such that when the first locking member rotates to cause the first mating portion to mate with the second mating portion, the first locking member is locked by the second locking member, and an overlapping region A of the locking groove and the lock pin passage groove, projected in a direction perpendicular to the first locking wall surface, is located between the first plane and the second plane.

2. The lock assembly according to claim 1, wherein when the first locking member is locked by the second locking member, in the direction perpendicular to the first locking wall surface, a region in which projections of the first locking member and the lock pin passage groove overlap is denoted as B, and at least part of the region B is located on a side of the region A closer to the first rotation shaft.

3. The lock assembly according to claim 1 or 2, wherein the lock pin passage groove comprises an open end and a closed end, an edge of the first locking member is recessed toward a middle portion in a direction parallel to the first locking wall surface to form the locking groove, the first locking member comprises a first extension arm and a second extension arm respectively located on two sides of the locking groove, the first extension arm is closer to the closed end than the second extension arm, and the second extension arm is configured to be at least partially located between the open end and the closed end when the first locking member is locked by the second locking member.

4. The lock assembly according to claim 3, wherein the first locking member is configured to be rotatable between a first locking position and a first unlocking position, wherein
when the first locking member is in the first locking position, the first locking member is locked by the second locking member; and
when the first locking member is in the first unlocking position, the first locking member disengages from the locking engagement with the second locking member.

5. The lock assembly according to claim 4, wherein when the first locking member is in the first unlocking position, in the direction perpendicular to the first locking wall surface, a projection of the second extension arm does not overlap with the projection of the lock pin passage groove.

6. The lock assembly according to claim 3, wherein the first mating portion is located on the first extension arm.

7. The lock assembly according to claim 4 or 5, wherein the first extension arm further comprises a first arc surface centered on the first rotation shaft, the first arc surface facing the second locking member when the first locking member is in the first unlocking position.

8. The lock assembly according to claim 7, wherein the first arc surface is configured to be at least partially in contact with the second locking member when the first locking member is in the first unlocking position.

9. The lock assembly according to any one of claims 1 to 8, wherein the second locking member has a second unlocking position and a second locking position relative to the mounting base, wherein in the direction perpendicular to the first locking wall surface, the second locking member, when in the second unlocking position, does not overlap with a maximum rotation range of the first locking member; and
when the second locking member is in the second locking position, the first mating portion mates with the second mating portion, so that the first locking member is locked by the second locking member.

10. The lock assembly according to any one of claims 1 to 9, wherein the second locking member has one of a guide post and an arc-shaped guide hole, the mounting base has the other of the guide post and the guide hole, the guide post is installed in the guide hole, and the guide hole surrounds the second rotation shaft.

11. The lock assembly according to claim 9, further comprising: a first reset member, wherein the first reset member is connected between the mounting base and the second locking member, and the first reset member is configured to drive the second locking member to rotate from the second unlocking position to the second locking position.

12. The lock assembly according to claim 9, further comprising: a drive assembly, wherein the drive assembly is mounted to the mounting base, and the drive assembly is configured to be capable of driving the second locking member to rotate from the second locking position to the second unlocking position.

13. The lock assembly according to claim 12, wherein the drive assembly comprises: a drive arm and a drive rod, wherein the drive arm is rotatably disposed on the mounting base via a third rotation shaft, the drive rod is connected to the drive arm, and the drive rod is configured to drive the drive arm to rotate so as to drive the second locking member to move from the second locking position to the second unlocking position.

14. The lock assembly according to claim 13, wherein the drive arm is configured to rotate between a third unlocking position and a third locking position, and the drive arm is configured to drive, when rotating from the third locking position to the third unlocking position, the second locking member to move from the second locking position to the second unlocking position.

15. The lock assembly according to claim 14, further comprising: a second reset member, wherein the second reset member is connected between the mounting base and the drive arm, and the second reset member is configured to drive the drive arm to move from the third unlocking position to the third locking position.

16. The lock assembly according to claim 14 or 15, wherein the drive rod is configured to move between a fourth unlocking position and a fourth locking position, and the drive rod is configured to drive, when moving from the fourth locking position to the fourth unlocking position, the drive arm to move from the third locking position to the third unlocking position.

17. The lock assembly according to claim 16, wherein the lock assembly further comprises a guide sleeve, wherein the guide sleeve is disposed on the mounting base, and the drive rod runs through the guide sleeve, so that the drive rod is capable of moving axially along the guide sleeve.

18. The lock assembly according to claim 17, wherein the drive rod is configured to move axially along the guide sleeve between the fourth unlocking position and the fourth locking position, and the lock assembly further comprises a third reset member, wherein the third reset member is disposed within the guide sleeve, and the third reset member is configured to drive the drive rod to move from the fourth unlocking position to the fourth locking position.

19. The lock assembly according to any one of claims 13 to 18, wherein the drive rod is movably disposed on the mounting base, the drive rod has one of a mounting post and a strip-shaped hole, the drive arm has the other of the mounting post and the strip-shaped hole, and the mounting post is movably installed in the strip-shaped hole.

20. The lock assembly according to claim 4, further comprising: a fourth reset member, wherein the fourth reset member is connected between the mounting base and the first locking member, and the fourth reset member is configured to drive the first locking member to rotate from the first locking position to the first unlocking position.

21. The lock assembly according to claim 4, wherein the lock assembly further comprises a detection switch, wherein the detection switch is configured to be triggered when the first locking member moves from the first locking position to the first unlocking position, and/or the detection switch is configured to be triggered when the first locking member moves from the first unlocking position to the first locking position.

22. The lock assembly according to claim 21, wherein the detection switch is fixedly disposed on the mounting base and corresponds to the second locking member, so that the detection switch is triggered by the second locking member when the first locking member is locked by the second locking member, and/or so that the detection switch is triggered by the second locking member when the first locking member is disengaged from the second locking member.

23. A mounting bracket, configured for mounting a battery to an electric apparatus, wherein the mounting bracket comprises the lock assembly according to any one of claims 1 to 22, and the lock assembly is configured to be detachably connected to the battery.

24. A battery, wherein the battery comprises the lock assembly according to any one of claims 1 to 22, and the lock assembly is configured to detachably mount the battery to an electric apparatus.

25. An electric apparatus, comprising a battery and the lock assembly according to any one of claims 1 to 22, wherein the battery is detachably mounted to the electric apparatus via the lock assembly.
